**Europäisches Patentamt**

**European Patent Office**

**Office européen des brevets**

(11) Veröffentlichungsnummer: **0 457 927 A1**

# (12) EUROPÄISCHE PATENTANMELDUNG

(21) Anmeldenummer: 90105235.7

(22) Anmeldetag: 25.05.90

(51) Int. Cl.5: **B27B 3/34**, B28D 1/06

(43) Veröffentlichungstag der Anmeldung:
27.11.91 Patentblatt 91/48

(84) Benannte Vertragsstaaten:
**AT DE IT**

(71) Anmelder: **FIRMA RÖTTGER JANSEN-HERFELD**
**Königstrasse 144-146**
**W-5630 Remscheid(DE)**

(72) Erfinder: **Jansen-Herfeld, Röttger, Dipl.-Ing.**
**Königstrasse 146 a**
**W-5630 Remscheid(DE)**

(54) Gattersägenspanner für die Steinindustrie mit Schutzkappe zum Schutz der Dichtungsbälge an den Spannkolben.

(57) Hydraulischer Gattersägenspanner zum Spannen von Sägeblättern zum Schneiden von Steinblöcken mit einem doppeltwirkenden Abdichtungssystem, dergestalt, daß eine hermetische Abdichtung der Kolbenmantelfläche gegenüber dem hydraulischen Sägenspanner mittels eines flexiblen Faltenbalgs (3) erzielt wird, der seinerseits durch eine ihn umgebende härtere Schutzkappe (2) gegen Beschädigungen von außen geschützt ist, und zwar sowohl in axialer als auch in radialer Kolbenrichtung.

EP 0 457 927 A1

Es sind hydraulische Gattersägenspanner für das Schneiden von Steinblöcken bekannt geworden, bei denen die Kolben gegenüber dem Spannerkörper durch Faltenbälge oder Membranen abgedichtet sind, um das Eindringen des zum Schneiden erforderlichen Wassers und des Wassers zum Reinigen der Maschinen zu verhindern.

Diese Faltenbälge zur Abdichtung der Kolben haben aufgrund der notwendigen Flexibilität und damit Weichheit des Materials den Nachteil, daß diese beim Abspritzen bzw. Reinigen zerstört werden, da dieses mit einem Wasserstrahl mit bis zu 100 bar gemacht wird.

Hierbei wird nicht nur der Dichtungsbalg zerstört, sondern durch den hohen Druck hebt sich dieser von den zu verbindenden Stahlteilen und läßt das Spritzwasser in das Kolben-Zylinder-System.

Der Erfindung liegt die Aufgabe zugrunde, ein Abdichtsystem zu schaffen, das sowohl durch seine Flexibilität den Kolbenhub ermöglicht und andererseits einen ausreichenden Widerstand gegenüber dem Reinigungswasserstrahl bietet.

Die erfindungsgemäße Dichtung besteht aus zwei Teilen, wobei ein flexibler Faltenbalg aus weicherem Material die Abdichtung des Kolbens gegenüber dem Spannerkörper, unter Berücksichtigung des erforderlichen Kolbenhubes ermöglicht.

Dieser Faltenbalg ist zum Schutz gegen das Spritzwasser mit einer härteren Schutzkappe umgeben, die eine konzentrische Öffnung zum Durchlaß des Kolbens und des mit dem Kolben verbundenen Schutzbalges in dem Bereich aufweist, wo der Schutzbalg im ausgefahrenen Zustand keine Angriffsfläche für den Wasserstrahl bietet, d. h. wo der Schutzbalg etwa parallel zur Kolbenhubrichtung verläuft.

Die bei eingefahrenen Kolben im Inneren der Schutzkappe liegenden Teile des Faltenbalgs, die dem Wasserstrahl gegenüber eine Angriffsfläche bieten, sind dadurch geschützt, daß der Wasserstrahl aufgrund des verhältnismäßig kleinen Ringspalts abgelenkt wird und daß sich die darunter befindlichen Teile sofort mit Wasser füllen und damit eine Reduzierung der kinetischen Energie des Wasserstrahls bewirkt wird.

Außerdem übt die äußere harte Schutzkappe eine radiale Druckwirkung auf den darunter liegenden weichen Faltenbalg aus und hält diesen somit besser in seiner vorgesehenen Position. Darüberhinaus ist diese äußere Schutzkappe durch einen vorspringenden Ring an seinem unteren Bund formschlüssig mit dem Faltenbalg bzw. dem Sägenspanner verbunden.

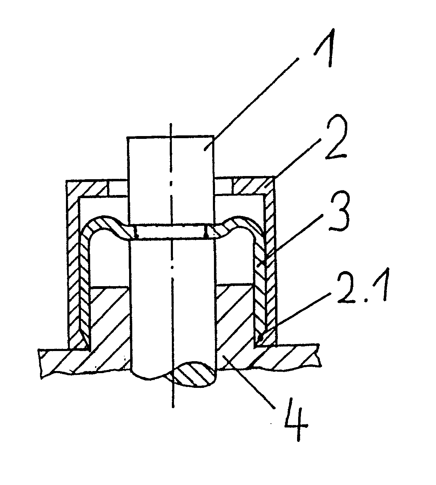

Figur 1 zeigt das erfindungsgemäße Dichtungssystem mit dem Spannkolben (1), der äußeren Schutzkappe (2), dem inneren weicheren Faltenbalg (3) und einen Teil des Spannerkörpers (4).

Bezugszeichenliste

1     hydraulischer Kolben
2     Schutzkappe
3     Faltenbalg
4     Sägenspannerkörper

**Patentansprüche**

1. Hydraulischer Gattersägenspanner zum Spannen von Sägeblättern zum Schneiden von Steinen mit die hydraulischen Spannkolben und den Spannerkörper miteinander abdichtenden Faltenbälgen bzw. Membranen dadurch gekennzeichnet, daß die Faltenbälge (3) bzw. Membranen, die den Kolben (1) gegenüber dem Sägenspanner (4) hermetisch abdichten von einer Schutzkappe (2) umgeben sind, die aus härterem Material besteht als die Faltenbälge (3) und die eine zum Kolben konzentrische Öffnung aufweisen, die die Axialbewegung der Kolben ermöglicht und andererseits den Faltenbalg (3) radial und axial im wesentlichen schützt.

2. Hydraulischer Gattersägenspanner nach Anspruch 1 dadurch gekennzeichnet, daß die äußeren Schutzkappen radial gegen die inneren Faltenbälge (3) an ihrem Außendurchmesser drücken und durch eine ringförmige Lippe formschlüssig mit dem hydraulischen Sägenspanner, insbesondere mit dem Faltenbalg (3) verbunden sind.

**Europäisches Patentamt**

# EUROPÄISCHER RECHERCHENBERICHT

Nummer der Anmeldung

**EP 90 10 5235**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-U-8 903 373  (R. JANSEN-HERFELD)<br>* das ganze Dokument * <br>– – – – – | 1,2 | B 27 B 3/34<br>B 28 D 1/06 |
| | | | **RECHERCHIERTE SACHGEBIETE (Int. Cl.5)** |
| | | | B 27 B |

Der vorliegende Recherchenbericht wurde für alle Patentansprüche erstellt

| Recherchenort | Abschlußdatum der Recherche | Prüfer |
|---|---|---|
| Den Haag | 21 Januar 91 | MOET H.J.K. |